# EUROPÄISCHE PATENTSCHRIFT

(11) **EP 0 823 581 B1**
(45) Veröffentlichungstag und Bekanntmachung des Hinweises auf die Patenterteilung: **02.02.2000**
(21) Anmeldenummer: 97109267.1
(22) Anmeldetag: 07.06.1997
(51) Int. Cl.: F16L 59/06

(54) **Aluminiumfolienstruktur und Verfahren zum Erzeugen einer Aluminiumfolienstruktur**
Aluminium foil structure and method of manufacturing of an aluminium foil structure
Structure de feuilles en aluminium et procédé de fabrication d'une structure de feuilles en aluminium

(30) Priorität: 08.08.1996 DE 19631938
(43) Veröffentlichungstag der Anmeldung: 11.02.1998
(73) Patentinhaber: AEG Hausgeräte GmbH, 90429 Nürnberg (DE)
(72) Erfinder: Rausch, Harald, Dipl.-Ing., 90461 Nürnberg (DE); Piechowiak, Romuald, Dipl.-Phys., 91126 Schwabach (DE); Hauer, Theo, 91541 Rothenburg o.T. (DE); Küfner, Werner, 90429 Nürnberg (DE)

(56) Entgegenhaltungen:
- GB-A- 474 370
- US-A- 5 011 743

## Beschreibung

Die Erfindung betrifft eine Aluminiumfolienstruktur und ein Verfahren zum Erzeugen einer Aluminiumfolienstruktur.

Aus *DE-A-40 03 770* ist eine Wärmeisolierung für wärmetechnische Geräte bekannt mit luftgefüllten Matten aus Aluminiumfolie, deren Außenseite mäanderförmig profiliert ist. Die Matten werden mit ihren profilierten Seiten in mehreren Lagen übereinandergestapelt.

Aus der *DE-A-44 38 394* ist eine Wärmeisolierung für eine Back- und Bratofenmuffel für Herde bekannt, die aus einem mehrlagigen Aluminiumfolienpaket und einer Schaumstoffmatte besteht, wobei die einzelnen Lagen des Aluminiumfolienpaketes um die Außenwandung der Back- und Bratofenmuffel gelegt oder gewickelt sind und die Schaumstoffmatte das Aluminiumfolienpaket umschließt. Als Aluminiumfolie ist eine Aluminiumprägefolie vorgesehen. Zwischen den Prägestrukturen der einzelnen Aluminiumprägefolienlagen entstehen luftgefüllte Zwischenräume, die die Wärmeisolierung verbessern.

*GB-A-474370* offenbart eine Aluminiumfolienstruktur und ein Verfahren zum Herstellen einer Aluminiumfolienstruktur. Diese bekannte Aluminiumfolienstruktur wird mit Doppelfalten versehen, die zwei in entgegengesetzte Richtungen von der Folienoberfläche weg ragende lineare Faltenkanten aufweisen.

Ein Problem bei diesen bekannten, aus Aluminiumfolien gebildeten Wärmeisolierungen besteht darin, daß sich die einzelnen Aluminiumfolienlagen an einer Vielzahl von Kontaktflächen berühren. An diesen Kontaktflächen entstehen Wärmebrücken zwischen den einzelnen Folienlagen, über die aufgrund der guten Wärmeleitung von Aluminium ein Wärmedurchgang durch die Wärmeisolierung stattfinden kann.

Aus der *US-A-5011743* ist eine Aluminiumfolienstruktur mit mehreren übereinandergestapelten Aluminiumfolienlagen bekannt. Die Aluminumfolienlagen weisen spitzenförmige, geprägte Abstandhalter auf, auf denen die Nachbarfolie mit ebenen Oberflächenbereichen aufliegt. Durch diese nur punktförmigen Berührungen der Aluminiumfolienlagen wird eine Verringerung der Wärmeverluste durch Wärmebrücken erreicht. Allerdings weist durch die Prägung der Spitzen die den Spitzen gegenüberliegende Oberfläche der Aluminiumfolie eine der Form der Spitze entsprechende Einbuchtungen auf. In diese Einbuchtungen können die Spitzen der Nachbarfolie hineinrutschen, wodurch großflächige Wärmebrücken entstehen.

Der Erfindung liegt nun die Aufgabe zugrunde, eine Aluminiumfolienstruktur mit wenigstens einer Aluminiumfolie anzugeben, bei der bei Anordnung mehrerer Lagen von Aluminiumfolie übereinander die Wärmeleitung zwischen im Stapel aufeinanderfolgenden Aluminiumfolienlagen möglichst gering gehalten wird und die Abstände zwischen den Aluminumfolienlagen eingehalten werden. Die Aluminiumfolienstruktur soll insbesondere als Wärmeisolierung verwendbar sein, insbesondere für die Ofenmuffel eines Haushaltsgeräts. Ferner soll ein Verfahren zum Erzeugen einer solchen Aluminiumfolienstruktur angegeben werden.

Diese Aufgabe wird gemäß der Erfindung gelöst mit den Merkmalen des Anspruchs 1 bzw. des Anspruchs 6.

Die Aluminiumfolienstruktur gemäß Anspruch 1 umfaßt wenigstens eine Aluminiumfolie mit einer vorderen Oberfläche und einer hinteren Oberfläche. Die Aluminiumfolie weist wenigstens an ihrer vorderen Oberfläche wenigstens ein aus der Aluminiumfolie gebogenes Faltelement auf, das beim größten Abstand von der vorderen Oberfläche in Form einer Spitze ausgebildet ist. Die hintere Oberfläche jeder Aluminiumfolie ist in einem unmittelbar dem Faltelement gegenüberliegenden Teilbereich im wesentlichen eben ohne Einbuchtungen.

Diese Aluminiumfolienstruktur ermöglicht eine hervorragende Wärmeisolierung. Die wenigstens eine Aluminiumfolie kann nämlich in wenigstens zwei Lagen übereinander gewickelt werden, oder es können mehrere Aluminiumfolien übereinandergestapelt werden, wobei die Faltelemente als Abstandhalter zwischen den Folienlagen wirken, indem eine Aluminiumfolienlage auf den Spitzen der Faltelemente der nächsten Lage abgestützt wird. Bei diesem Übereinanderstapeln mehrerer Aluminiumfolienlagen wird der Abstand zwischen den einzelnen Lagen durch die Faltelemente immer eingehalten, da die Faltelemente nicht in Einbuchtungen rutschen können. Das zwischen den Folienlagen befindliche Gas, vorzugsweise Luft, gewährleistet eine gute Wärmeisolierung. Aufgrund der geringen Flächenausdehnung der Spitzen ist der direkte Wärmeübergang zwischen benachbarten Folienlagen durch Wärmeleitung nur gering.

Das Verfahren gemäß Anspruch 6 zum Erzeugen einer Aluminiumfolienstruktur umfaßt folgende Verfahrensschritte;
a) Falten wenigstens einer Falte in einer Aluminiumfolie mit zwei Faltenflächen gleichen Höhe, die in einer von einer Oberfläche der Aluminiumfolie beabstandeten Faltkante zusammenlaufen und dicht beieinander angeordnet sind, vorzugsweise sich berühren,
b) Verformen der Falte zu wenigstens einem Faltelement, das in dem größten Abstand von der Oberfläche der Aluminiumfolie in eine wenigstens annähernd punktförmige Spitze zuläuft, wobei die Faltenflächen dicht beieinander angeordnet bleiben, vorzugsweise sich weiter berühren.

Vorteilhafte Weiterbildungen und Ausgestaltungen der Aluminiumfolienstruktur und des Verfahrens zum Erzeugen einer Aluminiumfolienstruktur ergeben sich aus den vom Anspruch 1 bzw. vom Anspruch 6 abhängigen Ansprüchen.

In einer weiteren Ausführungsform der Aluminiumfolienstruktur sind mehrere Aluminiumfolienlagen derart übereinandergestapelt, daß die Spitzen der Faltelemente einer Aluminiumfolienlage auf einem ebenen Teilbereich einer Oberfläche der nächsten Aluminiumfolielage aufliegen.

Vorzugsweise sind bei jeder Aluminiumfolie mehrere Faltelemente vorgesehen, deren Spitzen matrixförmig angeordnet sind.

Eine bevorzugte Anwendung findet die Aluminiumfolienstruktur als Wärmeisolierung, insbesondere für die Ofenmuffel eines Haushaltsgeräts.

In einer vorteilhaften Ausführungsform des Verfahrens wird das wenigstens eine Faltelement durch Verformen der Faltkante der Falte zur Oberfläche der Aluminiumfolie hin geformt.

In einer weiteren Ausführungsform des Verfahrens wird die Falte entlang wenigstens zweier Schnitte zur Oberfläche der Aluminiumfolie hin eingeschnitten, und das Faltelement wird durch Umbiegen der Ecken des zwischen den beiden Einschnitten liegenden Teils der Falte zur Oberfläche der Aluminiumfolie hin geformt. Vorzugsweise werden dann mehrere Einschnitte in die Falte erzeugt, und die Falte wird zwischen wenigstens zwei Einschnitten zur Oberfläche der Aluminiumfolie hin umgebogen, so daß sie in der Endstellung im wesentlichen parallel zur Oberfläche der Aluminiumfolie liegt. Diese umgebogenen Faltenteile stabilisieren den Aufbau der Aluminiumfolienstruktur.

Zur weiteren Erläuterung der Erfindung wird auf die Zeichnung Bezug genommen in deren
- FIG. 1 bis 3: die Ergebnisse von drei aufeinanderfolgenden Verfahrensschritten eines Verfahrens zum Herstellen einer Aluminiumfolienstruktur und
- FIG. 4: ein Ausführungsbeispiel einer Aluminiumfolienstruktur
jeweils schematisch dargestellt sind.

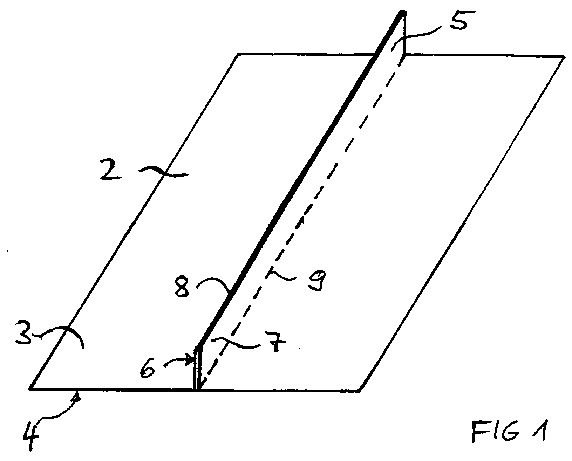

FIG. 1 zeigt eine Aluminiumfolie 2 mit einer vorderen Oberfläche (Vorderseite) 3 und einer hinteren Oberfläche (Rückseite) 4. Die Aluminiumfolie 2 ist durch Faltschritte oder Biegeschritte in einem Teilbereich so verformt, daß eine Falte 5 entsteht mit zwei Faltenflächen 6 und 7, die in einer Faltkante 8 zusammenlaufen. Die beiden Faltenflächen 6 und 7 sind in einem möglichst kleinen Abstand zueinander angeordnet und berühren sich vorzugsweise an ihren Innenseiten, die mit einem Teil der hinteren Oberfläche 4 der Aluminiumfolie 2 gebildet sind. Zum Herstellen der Falte 5 wird die Aluminiumfolie 2 entlang dreier zueinander paralleler Knicklinien (Faltlinien) gefaltet. Die mittlere Knicklinie entspricht der Faltkante 8 der Falte 5, während die in der Abbildung rechts von der Faltkante 8 liegende Knicklinie mit 9 bezeichnet ist. Die der linken Faltfläche 6 zugeordnete und links von der Faltkante 8 liegende weitere Knicklinie ist in der Zeichnung von der Falte 5 verdeckt. Die beiden Faltflächen 6 und 7 der Falte 5 weisen die gleiche Höhe, gemessen als Abstand von der Oberfläche 3 der Aluminiumfolie 2, auf, so daß die Faltkante 8 in einem im wesentlichen gleichen Abstand von der Oberfläche 3 der Aluminiumfolie 2 verläuft. Durch die Faltung der Aluminiumfolie 2 entsteht somit eine geschlossene Falte 5 mit einer der doppelten Folienstärke der Aluminiumfolie 2 entsprechenden Stärke, die vorzugsweise senkrecht zur Oberfläche 3 der Aluminiumfolie 2 ausgerichtet ist.

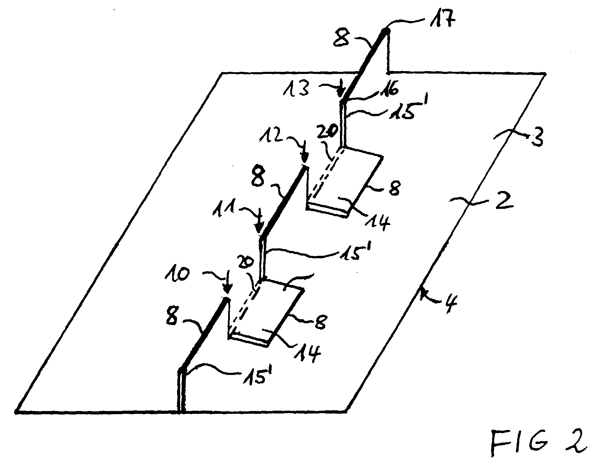

Im nächsten Verfahrensschritt gemäß FIG. 2 wird die Falte 5 mit mehreren Einschnitten 10 bis 13 versehen, die vorzugsweise senkrecht zur Oberfläche 3 der Aluminiumfolie 2 gerichtet sind und vorzugsweise auch bis an die Oberfläche 3 der Aluminiumfolie 2 hinunterreichen. Der zwischen den Einschnitten 10 und 11 liegende Teil der Falte 5 wird auf die Oberfläche 3 der Aluminiumfolie 2 hinuntergeklappt entlang einer Knicklinie 20 ebenso wie der zwischen den Einschnitten 12 und 13 liegende Teil der Falte 5. Die derart heruntergefalteten Teile der Falte 5 bilden Stabilisierungselemente 14, die auf der Oberfläche 3 der Aluminiumfolie 2 aufliegen. Vor dem Einschnitt 10, zwischen den Einschnitten 11 und 12 und hinter dem Einschnitt 13 bleiben Faltenteile 15' stehen, die jeweils zwei Ecken 16 und 17 aufweisen. Diese Faltenteile 15' weisen die im wesentlichen eindimensionale Faltenkante 8 der ursprünglichen Falte 5 auf.

In einem folgenden Verfahrensschritt werden diese Faltenteile 15' zu Faltelementen umgeformt, die im größten Abstand von der Oberfläche 3 der Aluminiumfolie 2 nur noch eine wenigstens annähernd punktförmige (nulldimensionale) Spitze aufweisen.

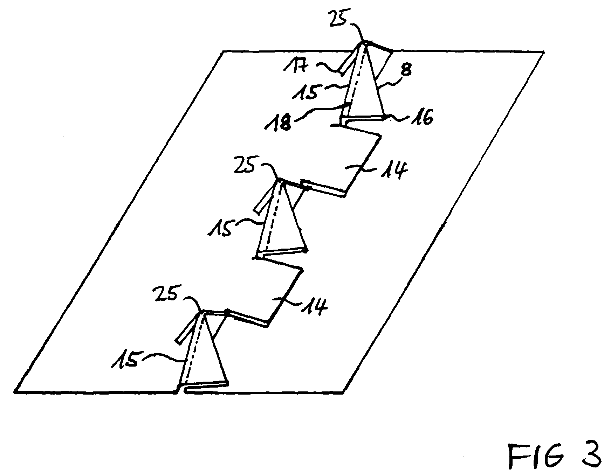

FIG. 3 zeigt ein Ausführungsbeispiel für eine solche Formung der Faltelemente. Die fertig geformten Faltelemente sind mit 15 bezeichnet und sind durch Umbiegen (Umfalten) der Ecken 16 und 17 der Faltenteile 15' in FIG. 2 gebildet. Die Ecken 16 und 17 werden dabei so zur Oberfläche 3 der Aluminiumfolie 2 hin gefaltet, daß von der Faltkante 8 im größten Abstand von der Oberfläche 3 eine im wesentlichen punktförmige Spitze 25 übrig bleibt und der Rest der Faltenkante 8 tiefer, d. h. näher zur Oberfläche 3 der Aluminiumfolie 2, angeordnet ist. Es werden also entlang von Knicklinien 18 im wesentlichen dreieckige Flügel 21 und 22 mit den Ecken 16 bzw. 17 nach unten zur Oberfläche 3 der Aluminiumfolie 2 hin gefaltet. Die beiden Flügel 21 und 22 können insbesondere auf der Oberfläche 3 abgestützt sein. Ferner können die beiden Flügel 21 und 22 der Faltelemente 15 wie dargestellt in entgegengesetzte Richtung gefaltet werden oder auch auf der gleichen Seite der Falte 5 angeordnet sein. Die beiden Flügel 21 und 22 müssen auch nicht symmetrisch angeordnet sein, so daß die Spitze 25 eines Faltelementes 15 auch gegen die Mitte des Faltelements 15 verschoben angeordnet sein kann. Ferner kann das gesamte Faltelement 15 auch aus der Vertikalen zur Oberfläche 3 der Aluminiumfolie 2 geneigt sein. Durch die beschriebenen Faltprozesse erhält man sehr stabile Faltelemente 15 mit Spitzen 25, auf denen weitere Aluminiumfolien 2 abgestützt werden können.

In einer einfachen, nicht dargestellten Abwandlung können die Einschnitte 10 bis 13 gemäß FIG. 2 auch so verlaufen, daß direkt durch den Schneidevorgang Spitzen aus den Faltenteilen 15' gebildet werden.

In einer weiteren, nicht dargestellten Ausführungsform kann auf Einschnitte in der Falte 5 gemäß FIG. 1 auch ganz verzichtet werden. Die Faltelemente mit den Spitzen werden dann durch Herunterbiegen der Falte 5 auf beiden Seiten des als Spitze vorgesehenen Teils in zueinander entgegengesetzten Richtungen erzeugt. Es entsteht dann aus der ursprünglichen Falte 5 eine gebirgeartig geformte Struktur mit einer vorgegebenen Anzahl von Spitzen.

Für die zum Herstellen der Faltelemente 15 verwendeten Biegeprozesse können beispielsweise geeignete Walzenwerkzeuge und für die Schneideprozesse geeignete Schneidewerkzeuge verwendet werden.

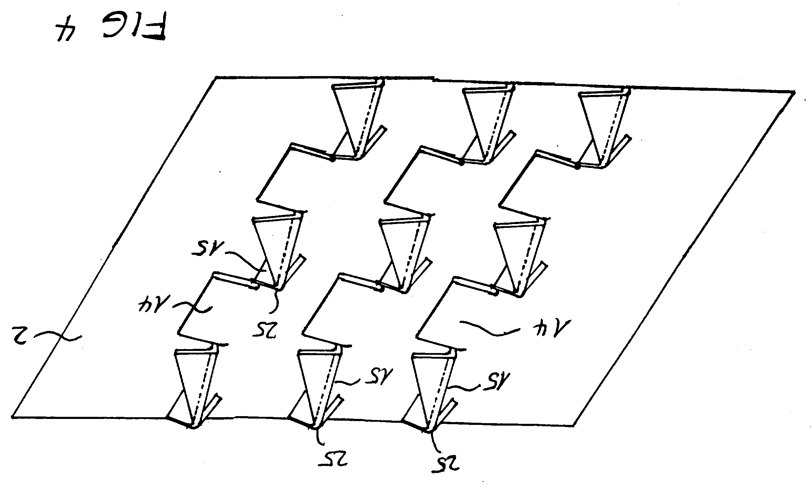

FIG. 4 zeigt ein Ausführungsbeispiel einer Aluminiumfolienstruktur mit einer Aluminiumfolie 2, die matrixförmig angeordnete Faltelemente 15 mit entsprechende matrixförmig angeordneten Spitzen 25 und zwischen jeweils zwei Faltelementen 15 angeordnete Stabilisierungselemente 14 gemäß FIG. 3 aufweist.

Da die beiden Faltenflächen 6 und 7 der ursprünglichen Falte 5 dicht beieinander angeordnet sind und sich vorzugsweise berühren, ist die hintere Oberfläche 4 der Aluminiumfolie 2 trotz der Falte 5 gemäß FIG. 1 im wesentlichen eben (glatt, flach) und weist keine Unregelmäßigkeiten oder Vertiefungen aufgrund der Falte 5 auf. Auch in den folgenden Verfahrensschritten wird die Glattheit der hinteren Oberfläche 4 nicht wesentlich beeinträchtigt. Aluminiumfolienstrukturen gemäß FIG. 3 oder FIG. 4 können somit in beliebiger Zahl aufeinandergestapelt werden, indem die glatte, hintere Oberfläche 4 einer Aluminiumfolie 2 auf die Spitzen 25 einer darunterliegenden oder darüberliegenden Aluminiumfolie 2 aufgesetzt wird. Der Wärmeübergang zwischen zwei mit den Faltelementen 15 versehenen Aluminiumfolien 2 ist aufgrund der geringen Kontaktflächen über die Spitzen 25 äußerst gering, so daß mit einer Stapelung von gemäß der Erfindung strukturierten Aluminiumfolien 2 eine hervorragende Wärmeisolierung, insbesondere für die Ofenmuffel eines Haushaltsgeräts (Backofen, Herd) erreicht werden kann. Die aufeinandergestapelten Aluminiumfolienlagen 2 werden dann um die Ofenmuffel herumgewickelt.

In einer weiteren nicht dargestellten Ausführungsform können auch an beiden Oberflächen der Aluminiumfolie Faltelemente zueinander versetzt vorgesehen sein.

Die Spitzen der Faltelemente bilden den höchsten Punkt jedes Faltelements, gemessen von der Folienoberfläche, müssen jedoch nicht in senkrechter Richtung von der Oberfläche wegzeigen, sondern können auch gegen diese Richtung geneigt sein. Die tatsächliche Flächenausdehnung der Spitzen liegt im allgemeinen unter 2 mm², vorzugsweise unter 1 mm².

### Bezugszeichenliste

- 2: Aluminiumfolie
- 3, 4: Oberfläche
- 5: Falte
- 6, 7: Faltenfläche
- 8: Faltenkante
- 9: Knicklinie
- 10 - 13: Einschnitte
- 14: Stabilisierungselement
- 15: Faltelement
- 15': Faltenteil
- 16, 17: Ecke
- 18: Knicklinie
- 20: Knicklinie
- 21, 22: Flügel
- 25: Spitze

## Patentansprüche

1. Aluminiumfolienstruktur mit wenigstens einer Aluminiumfolie (2) mit einer vorderen Oberfläche (3) und einer hinteren Oberfläche (4), wobei
a) die Aluminiumfolie (2) wenigstens an ihrer vorderen Oberfläche (3) wenigstens ein aus der Aluminiumfolie (2) gebogenes Faltelement (15) aufweist und dieses Faltelement (15) beim größten Abstand von der vorderen Oberfläche (3) in eine wenigstens annähernd punktförmige Spitze (25) zuläuft
dadurch gekennzeichnet, daß
b) die hintere Oberfläche (4) jeder Aluminiumfolie (2) wenigstens in einem unmittelbar dem Faltelement (15) gegenüberliegenden Teilbereich im wesentlichen eben ohne Einbuchtungen ist.

2. Aluminiumfolienstruktur nach Anspruch 1 mit mehreren Aluminiumfolienlagen, die derart übereinandergestapelt sind, daß ebene Teilbereiche einer Oberfläche einer Aluminiumfolienlage auf den Spitzen der Faltelemente der nächsten Aluminiumfolienlage aufliegen.

3. Aluminiumfolienstruktur nach Anspruch 1 oder Anspruch 2, bei der jede Aluminiumfolie (2) mehrere Faltelemente (15) aufweist, deren Spitzen (25) matrixförmig angeordnet sind.

4. Wärmeisolierung mit einer Aluminiumfolienstruktur nach einem der vorhergehenden Ansprüche.

5. Haushaltsgerät mit einer Ofenmuffel, die mit einer Wärmeisolierung gemäß Anspruch 4 umgeben ist.

6. Verfahren zum Erzeugen einer Aluminiumfolienstruktur, bei dem
a) in einem ersten Schritt in eine Aluminiumfolie (2) wenigstens eine Falte (5) mit zwei in einer von einer Oberfläche (3) der Aluminiumfolie (2) beabstandeten Faltkante (8) zusammenlaufenden und dicht beieinander angeordneten, vorzugsweise sich berührenden, Faltenflächen (6,7) gleichen Höhe gefaltet wird und
b) in einem zweiten Schritt die Falte (5) zu wenigstens einem Faltelement (15) weiterverformt wird, das in dem größten Abstand von der Oberfläche (3) der Aluminiumfolie (2) in eine wenigstens annähernd punktförmigen Spitze (25) zuläuft, wobei die Faltenflächen (6,7) dicht beieinander angeordnet bleiben, vorzugsweise sich weiter berühren.

7. Verfahren nach Anspruch 6, bei dem das wenigstens eine Faltelement (15) durch Verformen der Faltkante (8) der Falte (5) zur Oberfläche (3) der Aluminiumfolie (2) hin geformt wird.

8. Verfahren nach Anspruch 6 oder Anspruch 7, bei dem die Falte (5) entlang wenigstens zweier Einschnitte (10,11,12,13) zur Oberfläche (3) der Aluminiumfolie (2) hin eingeschnitten wird und das Faltelement (15) durch Biegen der Ecken (16,17) des zwischen den beiden Einschnitten (11,12) liegenden Faltenteils (15') der Falte (5) zur Oberfläche (3) der Aluminiumfolie (2) hin geformt wird.

9. Verfahren nach Anspruch 8, bei dem mehrere Einschnitte (10,11,12,13) in die Falte (5) erzeugt werden und die Falte (5) zwischen wenigstens zwei Einschnitten (10,11 oder 12,13) zur Oberfläche (3) der Aluminiumfolie (2) hin umgebogen wird, so daß sie im wesentlichen parallel zur Oberfläche (3) der Aluminiumfolie (2) zu liegen kommt.

## Claims

1. Aluminium foil structure with at least one aluminium foil (2) having a front surface (3) and a rear surface (4), wherein
a) the aluminium foil (2) has at least on its front surface (3) at least one fold element (15) bent from the aluminium foil (2) and this fold element (15) converges at the greatest distance from the front surface (3) in an at least approximately point-like tip (25)
characterised in that
b) the rear surface (4) of each aluminium foil (2), at least in a partial region directly opposite the fold element (15) is substantially plane without notches.

2. Aluminium foil structure according to claim 1 with a plurality of aluminium foil layers, which are so stacked that plane partial regions of one surface of an aluminium foil layer rest on the points of the fold elements of the next aluminium foil layer.

3. Aluminium foil structure according to claim 1 or 2, in which each aluminium foil (2) has a plurality of fold elements (15) whose points (25) are arranged in the form of a matrix.

4. Heat insulation having an aluminium foil structure according to one of the preceding claims.

5. Domestic appliance having an oven muffle, which is surrounded with a heat insulation arrangement according to claim 4.

6. Method of producing an aluminium foil structure in which
a) in a first step in an aluminium foil (2) at least one fold (5) is folded, having two fold surfaces (6, 7) of equal height which preferably touch one another, are disposed flush with one another, and converge in a fold edge (8) remote from one surface (3) of the aluminium foil (2), and
b) in a second step the fold (5) is further deformed into at least one fold element (15) which in the greatest distance from the surface (3) of the aluminium foil (2) converges in an at least approximately point-like tip (25), the fold faces (6, 7) remaining disposed flush with one another, preferably touching further.

7. Method according to claim 6, in which the fold element (15) of which there is at least one is formed towards the surface (3) of the aluminium foil (2) by deforming of the fold edge (8) of the fold (5).

8. Method according to claim 6 or 7, in which the fold (5) is cut out along at least two notches (10, 11, 12, 13) towards the surface (3) of the aluminium foil (2) and the fold element (15) is formed towards the surface (3) of the aluminium foil (2) by bending of the corners (16, 17) of the fold part (15') of the fold (5) lying between the two notches (11, 12).

9. Method according to claim 8, in which a plurality of notches (10, 11, 12, 13) are produced in the fold (5) and the fold (5) is bent between at least two notches (10, 11 or 12, 13) towards the surface (3) of the aluminium foil (2), so that it comes to rest substantially parallel to the surface (3) of the aluminium foil (2).

## Revendications

1. Structure de feuilles en aluminium avec au moins une feuille en aluminium (2) ayant une surface avant (3) et une surface arrière (4), où
a) la feuille en aluminium (2) présente au moins à sa surface avant (3) au moins un élément de pliage (15) plié à partir de la feuille en aluminium (2), et cet élément de pliage (15), au plus grand écart relativement à la surface avant (3) se termine par une pointe (25) au moins approximativement en forme de point, caractérisé en ce que
b) la surface arrière (4) de chaque feuille en aluminium (2), au moins dans une zone partielle opposée directement à l'élément de pliage (15), est sensiblement plane, sans creux.

2. Structure de feuilles en aluminium selon la revendication 1, avec plusieurs couches de feuilles en aluminium qui sont empilées de façon que les zones partielles planes d'une surface d'une couche de feuilles en aluminium reposent sur les pointes des éléments de pliage de la couche de feuilles en aluminium suivante.

3. Structure de feuilles en aluminium selon la revendication 1 ou la revendication 2, dans laquelle chaque feuille en aluminium (2) présente plusieurs éléments de pliage (15) dont les pointes (25) sont disposées en forme de matrice.

4. Isolation thermique comportant une structure de feuilles en aluminium selon l'une des revendications précédentes.

5. Appareil ménager comportant un moufle de four qui est entouré par une isolation thermique selon la revendication 4.

6. Procédé de fabrication d'une structure de feuille en aluminium, où
a) lors d'une première étape, il est réalisé dans une feuille en aluminium (2) au moins un pli (5) avec deux faces de pliage (6, 7) de même hauteur convergeant en une arête de pliage (8) espacée d'une surface (3) de la feuille en aluminium (2) et étroitement adjacentes, de préférence se touchant et
b) lors d'une deuxième étape, le pli (5) est formé en au moins un élément de pliage (15) qui se termine à l'écart le plus grand relativement à la surface (3) de la feuille en aluminium (2) par une pointe (25) au moins approximativement en forme de point, où les faces de pliage (6, 7) restent étroitement avoisinantes et continuent de préférence à se toucher.

7. Procédé selon la revendication 6, où au moins un élément de pliage (15), par déformation de l'arête de pliage (8) du pli (5), est formé vers la surface (3) de la feuille en aluminium (2).

8. Procédé selon la revendication 6 ou la revendication 7, où le pli (5) est coupé le long d'au moins deux entailles (10, 11, 12, 13) vers la surface (3) de la feuille en aluminium (2), et l'élément de pliage (15) est formé par une flexion des coins (16, 17) de la partie de pliage (15') du pli (5) située entre les deux entailles (11, 12) vers la surface (3) de la feuille en aluminium (2).

9. Procédé selon la revendication 8, où plusieurs entailles (10, 11, 12, 13) sont faites dans le pli (5), et le pli (5) est replié entre au moins deux entailles (10, 11 ou 12, 13) vers la surface (3) de la feuille en aluminium (2) de telle sorte qu'elles se situent sensiblement parallèlement à la surface (3) de la feuille en aluminium (2).
